(19) Europäisches Patentamt
European Patent Office
Office européen des brevets

(11) **EP 3 816 228 B1**

(12) **FASCICULE DE BREVET EUROPEEN**

(45) Date de publication et mention
de la délivrance du brevet:
**27.07.2022 Bulletin 2022/30**

(21) Numéro de dépôt: **20203900.4**

(22) Date de dépôt: **26.10.2020**

(51) Classification Internationale des Brevets (IPC):
***C08L 33/26*** *(2006.01)*

(52) Classification Coopérative des Brevets (CPC):
(C-Sets disponibles)
**C08L 33/26;** C08L 2201/54                    (Cont.)

(54) **EMULSION INVERSE POUR LA FRACTURATION HYDRAULIQUE**

INVERSE EMULSION FÜR DIE HYDRAULISCHE FRAKTURIERUNG

REVERSE EMULSION FOR HYDRAULIC FRACTURING

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **28.10.2019 FR 1912048**

(43) Date de publication de la demande:
**05.05.2021 Bulletin 2021/18**

(73) Titulaire: **S.P.C.M. SA
42160 Andrézieux Bouthéon (FR)**

(72) Inventeurs:
• **FAVERO, Cédrick
42163 ANDREZIEUX CEDEX (FR)**

• **TAVERNIER, Bruno
42163 ANDREZIEUX CEDEX (FR)**

(74) Mandataire: **Lavoix
2, place d'Estienne d'Orves
75441 Paris Cedex 09 (FR)**

(56) Documents cités:
**US-A1- 2012 316 090    US-A1- 2018 072 935**

(52) Classification Coopérative des Brevets (CPC):
(Cont.)

C-Sets
**C08L 33/26, C08L 91/00, C08L 93/00**

**Description**

La présente invention concerne le domaine technique des polymères sous forme d'émulsion eau dans huile, autrement appelée émulsion inverse. Plus précisément, l'invention a pour objet une émulsion inverse contenant un polymère anionique stable dans des conditions de très forte salinité.

D'autres aspects de l'invention concernent un procédé de préparation d'un fluide de fracturation et un procédé de fracturation hydraulique des réservoirs souterrains d'huile et de gaz non conventionnels utilisant ladite émulsion inverse et enfin le dernier aspect de l'invention concerne un procédé de réduction de frictions d'un fluide de fracturation dans une opération de fracturation hydraulique.

Etat antérieur de la technique

La production d'huile (hydrocarbures) et de gaz contenus dans des réservoirs souterrains non conventionnels se développe depuis plusieurs années et nécessite d'ouvrir des fractures dans le réservoir pour une production économique de l'huile et du gaz.

Dans la suite de la description de l'art antérieur et de l'invention, par « réservoirs souterrains non conventionnels », on désigne des gisements nécessitant des technologies particulières d'extractions car n'existant pas sous forme d'une accumulation dans une roche poreuse et perméable (voir Les hydrocarbures de roche-mère en France Rapport provisoire - CGIET n° 2011-04-G - Ministère de l'écologie, du développement durable, des transports et du logement - Avril 2011). Pour le gaz non conventionnel, on peut citer les gaz de schiste (ou shale gas en anglais), les gaz de houille (ou coal bed methane en anglais) ou les gaz de réservoirs compacts (ou tight gas en anglais). Pour l'huile non conventionnelle, on peut citer les huiles lourdes (ou heavy oil en anglais), les huiles de schiste (ou shale oil en anglais) ou les huiles de réservoirs compacts (ou tight oil en anglais).

Les réserves contenues dans les réservoirs non conventionnels sont énormes et extrêmement étendues dans des zones autrefois inexploitables comme les hydrocarbures de roche-mère tels que les schistes argileux, les gaz de réservoir compact, et les gaz de houille. Aux Etats-Unis, les gaz de schiste sont largement exploités et représentent aujourd'hui 46% du total du gaz naturel produit aux Etats-Unis alors qu'ils ne représentaient que 28% en 1998. Les bassins très étendus sont connus sous le nom de Barnett Shale, Ville Fayette Shale, Mowry Shale, Marcellus Shale, Utica Shale... L'exploitation des réservoirs compacts a été rendue possible par une évolution des techniques de forages.

Les techniques de production ont en effet évolué des puits verticaux vers des puits horizontaux, réduisant le nombre de puits de production nécessaires et leur empreinte au sol et permettant de mieux couvrir le volume du réservoir pour en récupérer au maximum le gaz. Cependant, les perméabilités sont insuffisantes pour que le gaz migre de la roche mère vers le puits facilement, et ainsi permettre de produire économiquement et en quantité le gaz ou l'huile. Il est donc nécessaire d'augmenter la perméabilité et les surfaces de production par des opérations de stimulation et en particulier par fracturation hydraulique de la roche en contact avec le puits.

Fracturation hydraulique

La fracturation hydraulique a pour but de créer une perméabilité supplémentaire et engendrer des surfaces de production de gaz ou d'huile plus importantes. En effet, la faible perméabilité, les barrières naturelles de couches compactes et l'imperméabilisation par les opérations de forage limitent fortement la production. Le gaz ou l'huile contenu dans le réservoir non conventionnel ne peut migrer facilement de la roche vers le puits sans stimulation.

Ces opérations de fracturation hydraulique sur les puits horizontaux ont commencé en 1960 dans les Appalaches et, aujourd'hui, plusieurs dizaines de milliers d'opérations ont eu lieues aux Etats-Unis.

Les technologies d'étude, de modélisation du réservoir, de forage, de cimentation et de stimulation sont devenues de plus en plus sophistiquées et mettent en œuvre des équipements permettant d'effectuer ces opérations dans des temps de plus en plus courts avec une analyse précise des résultats.

La stimulation du réservoir par fracturation hydraulique

Ces opérations consistent à injecter de l'eau à haute pression et à très fort débit de manière à créer des fractures réparties perpendiculairement aux puits de production. On procède généralement en plusieurs étapes afin de créer des fractures sur toute la longueur du puits horizontal, ce qui permet de couvrir un volume maximal du réservoir.

Afin de garder ces fractures ouvertes, on ajoute un agent de soutènement (par exemple du sable, des matières plastiques ou des céramiques calibrées) de manière à empêcher la fermeture de ces fractures et à maintenir la capillarité créée une fois l'injection stoppée.

Afin de réduire la puissance hydraulique nécessaire pour injecter rapidement l'eau ou la saumure dans la formation souterraine des polymères connus sous le nom de réducteurs de frictions sont utilisés. L'utilisation de tels polymères, permet de réduire les pertes de pression dues au frottement interne dans le fluide jusqu'à 70%.

Les polymères sous forme d'émulsion inverse sont couramment utilisés pour leur facilité de mise en œuvre. Leur utilisation repose sur la dissolution du polymère dans de l'eau ou dans une saumure. Pour ce faire, l'émulsion inverse s'inverse, de sorte à libérer le polymère contenu dans la phase eau de l'émulsion inverse. Après libération, le polymère se trouve dans l'eau ou la saumure dans laquelle l'émulsion inverse a été ajoutée.

Les fluides de fracturation sont de plus en plus basés sur des eaux contenant des quantités importantes de sels dissous. Dans ce contexte, l'industrie exige des réducteurs de friction qui fonctionnent efficacement dans les saumures hautes (saumure à concentration élevée en sels dissous), dont certains peuvent contenir plus de 30 000 mg.L-1 de sels dissous, voir plus de 100 000 mg.L-1 avec notamment des teneurs élevées en sels divalents.

Exposé de l'invention

La Demanderesse a découvert de manière surprenante qu'une émulsion inverse eau dans huile de composition spécifique donne des performances supérieures en termes de réduction de friction dans des conditions de très forte salinité avec de fortes teneurs en sels divalents.

L'invention concerne aussi un procédé de préparation d'un fluide de fracturation mettant en œuvre l'émulsion de l'invention.

Un troisième aspect de l'invention concerne un procédé de fracturation hydraulique dont le fluide d'injection a été préparé selon la méthode de l'invention précédente.

Enfin, un dernier aspect de l'invention concerne un procédé de réduction de frictions d'un fluide de fracturation dans une opération de fracturation hydraulique mettant en œuvre l'émulsion de l'invention.

Plus précisément, l'invention concerne tout d'abord une émulsion inverse eau dans huile comprenant :

- une huile ;
- de l'eau ;
- au moins un polymère anionique hydrosoluble de masse moléculaire moyenne supérieure à 3 million de daltons, contenant entre 4 et 14 mol% de monomères anioniques sulfonés, entre 0 et 17 mol% de monomères anioniques carboxylés et entre 69 et 96 mol % de monomères non ioniques ;
- au moins un agent d'inversion et au moins un agent émulsifiant, le rapport massique R de la quantité totale d'agent d'inversion à la quantité totale d'agent émulsifiant étant supérieur à 1,8,

l'agent d'inversion (ou agent inverseur) étant choisi parmi un nonylphénol éthoxylé, ayant préférentiellement entre 4 et 10 éthoxylations; un alcool éthoxylé/propoxylé, ayant préférentiellement des éthoxylations/propoxylations de façon à avoir un nombre total de carbone compris entre C10 et C25, un alcool tridécylique éthoxylé et un alcool gras éthoxylé/propoxylé,
l'agent émulsifiant étant choisi parmi le monooléate de sorbitan, les esters de sorbitan polyéthoxylés, la diéthanolamide des acides gras de l'huile de tall, ou les acides gras polyéthoxylés.

Dans le cadre de la présente invention on entend par l'expression « compris entre xxx et yyy » un intervalle incluant les bornes xxx et yyy.

L'huile utilisée pour préparer l'émulsion eau dans huile de l'invention peut être une huile minérale, une huile végétale, une huile synthétique ou un mélange de plusieurs de ces huiles.

Des exemples d'huile minérale sont les huiles minérales contenant des hydrocarbures saturés de type aliphatique, naphténique, paraffinique, isoparaffinique, cycloparaffinique ou naphtyle.

Des exemples d'huile synthétique sont le polydécène hydrogéné ou le polyisobutène hydrogéné, un ester tel que le stéarate d'octyle ou l'oléate de butyle. La gamme de produits Exxsol® d'Exxon convient parfaitement.

En général, le rapport pondéral de la phase aqueuse à la phase huileuse dans l'émulsion inverse est de préférence de 50/50 à 90/10, et préférentiellement de 70/30 à 80/20.

L'émulsion eau dans huile comprend avantageusement de 12 à 24% en poids d'huile, plus avantageusement de 15 à 22% en poids, par rapport au poids total de l'émulsion.

L'émulsion eau dans huile comprend avantageusement de 30 à 55% en poids d'eau, plus avantageusement de 35 à 48% en poids par rapport au poids total de l'émulsion.

Tel qu'utilisé ici, le terme "polymère hydrosoluble" désigne un polymère qui donne une solution aqueuse sans particule insoluble lorsqu'il est dissous sous agitation pendant 4 heures à 25°C et avec une concentration de 10 g.L-1 dans l'eau.

Dans la présente invention, le terme "agent émulsifiant" désigne un agent capable d'émulsifier de l'eau dans une huile et un "agent inverseur" est un agent capable d'émulsionner une huile dans de l'eau. Plus précisément, on considère qu'un agent inverseur est un tensioactif ayant un HLB supérieur ou égal à 10, et un agent émulsifiant est un tensioactif ayant un HLB strictement inférieur à 10.

L'équilibre hydrophile-lipophile (HLB) d'un composé chimique est une mesure de son degré d'hydrophilie ou lipophilie, déterminé en calculant les valeurs des différentes régions de la molécule, comme décrit par Griffin en 1949 (Griffin WC, Classification of Surface-Active Agents by HLB, Journal of the Society of Cosmetic Chemists, 1949, 1, pages 311-326).

Dans la présente invention, nous avons adopté le procédé de Griffin basé sur le calcul d'une valeur basée sur les groupes chimiques de la molécule. Griffin a attribué un nombre sans dimension compris entre 0 et 20 pour donner des informations sur la solubilité dans l'eau et dans l'huile. Les substances ayant une valeur HLB de 10 sont réparties entre les deux phases, de sorte que le groupe hydrophile (masse moléculaire Mh) se projette complètement dans l'eau tandis que le groupe hydrocarboné hydrophobe (masse moléculaire Mp) est adsorbé dans la phase non aqueuse.

La valeur HLB d'une substance de masse moléculaire totale M dont la partie hydrophile a une masse moléculaire Mh, est HLB = 20 (Mh / M).

L'émulsion eau dans huile selon l'invention peut être préparée selon tout procédé connu de l'homme du métier. Généralement, une solution aqueuse comprenant le ou les monomères et le ou les agents émulsifiants est émulsionnée dans une phase huileuse. Ensuite, la polymérisation est réalisée en ajoutant un initiateur de radicaux libres. On peut faire référence aux couples rédox, avec l'hydroperoxyde de cumène, le butylhydroxyperoxyde tertiaire ou les persulfates parmi les agents oxydants, le sulfite de sodium, le métabisulfite de sodium et le sel de Mohr parmi les agents réducteurs. Des composés azoïques tels que le chlorhydrate de 2,2'-azobis (isobutyronitrile) et de 2,2'-azobis (2-amidinopropane) peuvent également être utilisés.

Classiquement, la polymérisation est généralement effectuée de manière isotherme, adiabatique ou à température contrôlée. C'est-à-dire que la température est maintenue constante, généralement entre 10 et 60 ° C (isotherme), ou bien on laisse la température augmenter naturellement (adiabatique) et dans ce cas, la réaction est généralement commencée à une température inférieure à 10 ° C et la température finale est généralement supérieure à 50 ° C ou, enfin, l'augmentation de la température est contrôlée de manière à avoir une courbe de température entre la courbe isotherme et la courbe adiabatique.

Généralement, le ou les agents inverseurs sont ajoutés à la fin de la réaction de polymérisation, de préférence à une température inférieure à 50 ° C.

De préférence l'émulsion de l'invention contient entre 15 et 50 % en poids sec de polymère hydrosoluble, préférentiellement entre 15 to 40% en poids sec et encore plus préférentiellement entre 15 et 25 % en poids sec, par rapport au poids total de l'émulsion.

Selon une autre préférence, pour l'émulsion de l'invention, le rapport massique R de la quantité totale d'agent d'inversion à la quantité totale d'agent émulsifiant est supérieur à 2, encore plus préférentiellement supérieur à 2,5, encore plus préférentiellement supérieur à 3, encore plus préférentiellement supérieur à 3,5, encore plus préférentiellement supérieur à 4.

Le polymère anionique hydrosoluble contenu dans l'émulsion de l'invention comprend des monomères non ioniques et des monomères anioniques sulfonés et optionnellement des monomères anioniques carboxylés.

Les monomères non ioniques sont préférentiellement choisis parmi l'acrylamide, le méthacrylamide, les N-alkylacrylamides, les N-alkylméthacrylamides, les N,N dialkylacrylamides, les N,N dialkyleméthacrylamides, les esters acryliques; les esters méthacrylique. Le monomère non ionique préféré est l'acrylamide.

Les monomères anioniques sulfonés sont préférentiellement choisis parmi l'acide 2-acrylamido-2-méthylpropane sulfonique (ATBS), l'acide 2-méthacrylamido-2-méthylpropane, l'acide styrène sulfonique, l'acide vinylsulfonique, le méthacrylate de 3-sulfopropyle lesdits monomères anioniques étant non salifiés, partiellement ou totalement salifiés et les sels du méthacrylate de 3-sulfopropyle. Le monomère anionique sulfoné préféré est le sel de l'acide 2-acrylamido-2-méthylpropane sulfonique.

Les monomères anioniques carboxylés sont préférentiellement choisis parmi l'acide acrylique, l'acide méthacrylique, l'acide itaconique, l'acide maléique, lesdits monomères anioniques étant non salifiés, partiellement ou totalement salifiés. Le monomère anionique carboxylé préféré est le sel de sodium de l'acide acrylique.

Les monomères anioniques carboxylés optionnellement inclus dans le polymère anionique hydrosoluble peuvent aussi être le produit de réaction d'hydrolyse du polymère, bien connue par l'homme du métier. A titre d'exemple l'acide acrylique peut être le produit d'hydrolyse de l'acrylamide.

Plusieurs monomères non ioniques et anioniques peuvent être sélectionnés pour constituer le polymère anionique hydrosoluble de l'invention. Avantageusement le polymère anionique hydrosoluble est un polymère d'acrylamide et du sel de sodium de l'acide 2-acrylamido-2-méthylpropane sulfonique.

Le polymère anionique hydrosoluble a une masse moléculaire moyenne supérieure à 3 millions de daltons. Préférentiellement cette masse moléculaire moyenne est comprise entre 3 et 30 millions de daltons et encore plus préférentiellement entre 8 et 18 millions de daltons.

La "masse moléculaire moyenne " selon la présente invention est déterminée par la viscosité intrinsèque. La viscosité intrinsèque peut être mesurée par des méthodes connues de l'homme du métier et peut notamment être calculée à partir des valeurs de viscosité réduite pour différentes concentrations par une méthode graphique consistant à tracer les valeurs de viscosité réduite (sur l'axe des ordonnées) en fonction des concentrations (sur axe des abscisses) et en extrapolant la courbe à une concentration nulle. La valeur de viscosité intrinsèque est lue sur l'axe des ordonnées ou à l'aide de la méthode des moindres carrés. Ensuite, le masse moléculaire moyenne peut être déterminée par la célèbre équation de Mark-Houwink:

$$[\eta] = KM^\alpha$$

[η] représente la viscosité intrinsèque du polymère déterminée par la méthode de mesure de la viscosité en solution,
K représente une constante empirique,
M représente la masse moléculaire moyenne du polymère,
α représente le coefficient de Mark-Houwink
α et K, dépendent du système particulier polymère-solvant.

L'émulsion de l'invention contient préférentiellement entre 0,5 et 10% en poids d'agent d'inversion et entre 0,5 et 16 % en poids d'agent émulsifiant par rapport au poids total de l'émulsion.

L'émulsion eau dans huile comprend avantageusement de 0,8 à 2% en poids d'au moins un agent émulsifiant par rapport au poids total de l'émulsion.

L'émulsion eau dans huile comprend de préférence de 1,5 à 8% en poids d'au moins un agent inverseur par rapport au poids total de l'émulsion.

Optionnellement l'émulsion eau dans huile comprend de 1 à 40% en poids de sels, préférentiellement de 3 à 30% en poids, encore plus préférablement de 5 à 25% en poids et encore plus préférablement de 7 à 17% en poids de sels, par rapport au poids total de l'émulsion.

Les sels présents dans l'émulsion eau dans huile peuvent être par exemple des sels de sodium, des sels de lithium, des sels de potassium, des sels de magnésium, des sels d'aluminium, des sels d'ammonium, des sels de phosphate, des sels de sulfate, des sels de chlorure, des sels de citrate, des sels d'acétate, des sels de tartrate hydrogénophosphate, sels inorganiques hydrosolubles ou d'autres sels inorganiques et leurs mélanges. Ces sels comprennent le chlorure de sodium, le sulfate de sodium, le bromure de sodium, le chlorure de calcium, le sulfate d'ammonium, le chlorure d'ammonium, le chlorure de lithium, le bromure de lithium, le chlorure de potassium, le bromure de potassium, le sulfate de magnésium, le sulfate d'aluminium, l'hydrogénophosphate de sodium, l'hydrogénophosphate de potassium et leurs mélanges. Le chlorure de sodium, le chlorure de calcium, le chlorure d'ammonium, le sulfate d'ammonium sont préférés, et leurs mélanges sont davantage préférés.

Un autre aspect de l'invention concerne un procédé de préparation d'un fluide de fracturation comprenant :

a) La fourniture d'une émulsion inverse selon l'invention,
b) L'inversion de l'émulsion inverse en l'ajoutant à une saumure contenant plus de 30 000 ppm de sels et avec un ratio divalent R$^+$ supérieure ou égale à 0.15, R$^+$ égale au ratio massique : sels divalents/ sels totaux,
c) Éventuellement, l'ajout d'au moins un agent de soutènement.

Par sels totaux on entend la quantité totale de sel de la saumure.

La saumure peut contenir des sels monovalents et / ou polyvalents ou leurs combinaisons. Les exemples de sels incluent, sans limitation, les sels de sodium, de lithium, de potassium, d'aluminium, d'ammonium, de phosphate, de sulfate, de magnésium, de baryum, de nitrate et autres sels inorganiques et leurs mélanges.

La saumure contient de préférence au moins l'un des éléments suivants : chlorure de sodium, chlorure de calcium, bromure de sodium, bromure de calcium, chlorure de baryum, chlorure de magnésium, bromure de zinc, formiate de sodium et formiate de potassium.

Préférentiellement la saumure utilisée pour la préparation du fluide de fracturation contient plus de 70 000 ppm de sels et préférentiellement plus de 100 000 ppm de sels, de préférence, la saumure contient de 70 000 à 350 000 ppm de sels, de préférence de 100 000 à 350 000 ppm.

Selon un mode de réalisation avantageux du procédé de préparation du fluide de fracturation :

- lorsque la saumure comprend de 30 000 ppm à 70 000 ppm (borne supérieure exclue) de sels (étape b), le rapport R de l'émulsion (étape a) est de préférence supérieur à 1,8,
- lorsque la saumure comprend de 70 000 ppm à 100 000 ppm (borne supérieure exclue), le rapport R de l'émulsion est de préférence supérieur à 2,
- lorsque la saumure comprend de 100 000 ppm à 150 000 ppm (borne supérieure exclue) de sels, le rapport R de l'émulsion est de préférence supérieur à 2,5,

- lorsque la saumure comprend de 150 000 ppm à 200 000 ppm (borne supérieure exclue) de sels, le rapport R de l'émulsion est de préférence supérieur à 3,
- lorsque la saumure comprend de 200 000 ppm à 250 000 ppm (borne supérieure exclue) de sels, le rapport R de l'émulsion est de préférence supérieur à 3,5, et
- lorsque la saumure comprend plus de 250 000 ppm (borne supérieure exclue) de sels, le rapport R de l'émulsion est de préférence supérieur à 4.

Préférentiellement le ratio divalent R+ égale au ratio massique : sels divalents/ sels totaux est supérieur ou égal à 0,20 et encore plus préférentiellement R+ supérieure ou égale à 0,25.

L'inversion de l'émulsion de l'invention dans la saumure peut être avantageusement réalisée avec le dispositif et le procédé du document US 8 383 560 où l'émulsion est dissoute en continu avec un agencement de mélangeur statique multiple.

La présente invention concerne également le fluide de fracturation obtenue par le procédé de l'invention, notamment un fluide de fracturation comprenant :

- Une solution de saumure ;
- Un polymère anionique hydrosoluble selon l'invention ;
- L'huile de l'émulsion inverse de l'invention ;
- De l'eau.

L'agent de soutènement peut être choisi de façon non restrictive parmi le sable, la céramique, la bauxite, les billes de verre, et le sable imprégné de résine. Il représente préférentiellement de 0,5 à 40%, plus préférentiellement de 1 à 25% et encore plus préférentiellement de 1,5 à 20%, en poids du fluide de fracturation.

Le fluide de fracturation selon l'invention comprend de préférence entre 0,01% et 3% en poids de polymère anionique hydrosoluble de l'invention (additionné sous forme d'émulsion), et encore plus préférentiellement entre 0,025% et 1%, en poids, par rapport au poids total du fluide de fracturation.

La saumure qui compose le fluide de fracturation peut comprendre d'autres composés connus de l'homme de l'art, comme ceux cités dans le document SPE 152596, par exemple :

- Des agents anti-gonflement des argiles comme le chlorure de potassium, ou le chlorure de choline, et/ou
- Des biocides pour éviter le développement de bactéries en particulier sulfato réductrices pouvant former des masses visqueuses réduisant les surfaces de passage. On peut citer, par exemple, le glutaraldéhyde, qui est le plus utilisé, ou encore le formaldéhyde ou les isothiazolinones, et/ou
- Des réducteurs d'oxygène comme le bisulfite d'ammonium pour éviter la destruction des autres composants par oxydation et la corrosion des tubes d'injection, et/ou
- Des additifs anticorrosion pour protéger les tubes contre l'oxydation par les quantités résiduelles d'oxygène, le N,N dimethylformamide étant privilégié, et/ou
- Des lubrifiants comme les distillats d'huile, et/ou
- Des chélatants pour le fer comme l'acide citrique, l'EDTA (éthylène diamine tétra-acétique), les phosphonates, et/ou
- Des produits antitartres comme les phosphates, les phosphonates, les polyacrylates ou l'éthylène glycol.

Selon un mode de réalisation préféré, le procédé de préparation d'un fluide de fracturation comprend :

a) La fourniture d'une émulsion inverse selon l'invention contenant au moins entre 15 et 25 % en poids d'un polymère anionique hydrosoluble, par rapport au poids total de l'émulsion, contenant entre 4 et 14 mol% du sel de sodium de l'acide 2-acrylamido-2-méthylpropane sulfonique, entre 0 et 17% d'acrylate de sodium et entre 69 et 96 mol % d'acrylamide ; au moins un agent d'inversion et au moins un agent émulsifiant, le rapport massique R de la quantité totale d'agent d'inversion à la quantité totale d'agent émulsifiant étant supérieur à 2,5,

b) L'inversion de l'émulsion inverse en l'ajoutant à une saumure, contenant plus de 100 000 ppm de sels et avec un ratio divalent R+ supérieure ou égale à 0,2, R+ égale au ratio massique : sels divalents/ sels totaux, afin d'obtenir une concentration massique en polymère anionique hydrosoluble dans le fluide d'injection comprise entre 0,05 et 1%.

c) Éventuellement, l'ajout d'au moins un agent de soutènement.

Un troisième aspect de l'invention concerne un procédé de fracturation hydraulique de réservoir souterrain d'huile ou de gaz non conventionnel comprenant la préparation d'un fluide de fracturation tel que décrit précédemment, et l'injection dudit fluide de fracturation dans une formation souterraine.

Plus précisément l'invention concerne un procédé de fracturation d'une formation souterraine comprenant :

aa) la fourniture d'un fluide de fracturation obtenu selon la méthode de préparation décrite précédemment,

bb) l'introduction du fluide d'injection dans une partie de la formation souterraine,

cc) la fracturation de la formation souterraine avec le fluide d'injection,

dd) la récupération d'un mélange de gaz, d'huile et de fluide aqueux.

L'injection est réalisée sous pression de manière à créer des fractures réparties tout le long du puits de production.

Optionnellement, après la création des fractures, on injecte dans le réservoir au moins un composé oxydant et/ou au moins un composé tensioactif.

L'injection de ces composés permet de rétablir une viscosité de fluide proche de celle de l'eau.

Comme composé oxydant, on peut citer la javel (solution aqueuse d'un sel d'hypochlorite), l'eau oxygénée, l'ozone, les chloramines, les persulfates, les permanganates ou les perchlorates.

La nature chimique du (ou des) composé(s) tensio-actif(s) n'est pas critique. Ils peuvent être anioniques, non ioniques, amphotères, zwitterioniques et/ou cationiques. De préférence, le(s) composé(s) tensio-actif(s) de l'invention porte(nt) des charges anioniques.

De préférence, les composés tensioactifs utilisés sont choisis parmi les tensioactifs anioniques et leurs zwitterions choisis dans le groupe comprenant les dérivés d'alkylsulfates, d'alkyléthersulfates, d'arylalkylsulfates, d'arylalkyléthersulfates, d'alkylsulfonates, d'alkyléthersulfonates, d'arylalkylsulfonates, d'arylalkyléthersulfonates, d'alkylphosphates, d'alkylétherphosphates, d'arylalkylphosphates, d'arylalkylétherphosphates, d'alkylphosphonates, d'alkylétherphosphonates, arylalkylphosphonates, d'arylalkylétherphosphonates, d'alkylcarboxylates, d'alkyléthercarboxylates, d'arylalkylcarboxylates, d'arylalkyléthercarboxylates, de polyethers alkyles, de polyethers arylalkyles.

Enfin un quatrième est dernier aspect de l'invention concerne un procédé de réduction de friction d'un fluide de fracturation dans une opération de fracturation hydraulique d'un réservoir souterrain d'huile ou de gaz non conventionnel, comprenant la préparation d'un fluide de fracturation tel que décrit précédemment, et l'injection dudit fluide de fracturation dans une formation souterraine.

La réduction de friction permet de diminuer ou de supprimer les pertes liées aux frottements lors de l'injection du fluide de fracturation.

Pour la fracturation hydraulique, la réduction de friction implique que le polymère du fluide de fracturation apporte des propriétés rhéofluidifiantes à la solution afin d'avoir une viscosité relativement faible lors de l'injection (à cisaillement élevé) et une viscosité forte afin de maintenir l'agent de soutènement en suspension au niveau de la fracture lorsque le cisaillement diminue.

L'invention et les avantages qui en résultent ressortiront bien des exemples de réalisation suivants.

## EXEMPLES

Exemple 1: Emulsion contenant 20.00% en poids d'un polymère comprenant 2 mol% de monomères sulfonés

Une phase aqueuse est préparée avec 37,50% en poids d'une solution d'acrylamide (à 50% en poids dans l'eau), 2,50% en poids de solution d'ATBS.Na (2-acrylamido-2-méthylpropane sulfonate de sodium, à 50% en poids dans l'eau), 34,90% en poids d'eau déionisée et 0,02% en poids de Versenex 80.

Une phase huileuse est préparée à partir de 23,45% en poids d'huile (Exxsol® D100 S) et les agents émulsifiants suivants : 1,16% en poids de Witcamide®511 (diéthanolamine d'acides gras d'huile tall), 0,16% en poids de Span® 80 (monooléate de sorbitan) et 0,23% en poids de Tween® 81 (monooléate de sorbitan 5EO).

La phase aqueuse est ajoutée à la phase huileuse tout en mélangeant pour former une émulsion. La dispersion résultante est mise sous bullage d'azote pendant 30 minutes tandis que la température est stabilisée à 25 ° C, moment auquel 0,002% en poids de peroxyde est ajouté à l'émulsion et une solution à 0,075% en poids de métabisulfite de sodium (MBS) est introduite dans la dispersion à débit de 0,1 millilitre par minute. La température de polymérisation est contrôlée entre 38 ° C et 42 ° C pendant environ 90 minutes. Les monomères résiduels sont piégés en introduisant une solution à 0,03% en poids de métabisulfite de sodium (MBS) à un débit de 1,0 millilitre par minute. On obtient une émulsion de polymère eau dans huile contenant 20% de polymère actif d'acrylamide et d'ATBS.Na.

On ajoute 1,75% en poids d'un agent d'inversion (Marlophen® NP 8, éthers de nonylphénol et de polyéthylèneglycol 8 OE) dans l'émulsion de polymère eau-dans-huile pour faciliter la mise au point lors de l'utilisation. Le rapport massique R est égal à 1,5.

Exemple 2 : Emulsion contenant 20,00% en poids d'un polymère comprenant 10 mol% de monomères sulfonés

Une phase aqueuse est préparée avec 29,50% en poids d'une solution d'acrylamide (à 50% en poids dans l'eau), 10,50% en poids de solution d'ATBS.Na 2-acrylamido-2-méthylpropane sulfonate de sodium, à 50% en poids dans l'eau), 34,90% en poids d'eau déionisée et 0,02% en poids de Versenex 80.

Une phase huileuse est préparée à partir de 23,45% en poids d'huile (Exxsol® D100 S) et les agents émulsifiants suivants : 1,16% en poids de Witcamide®511 (diéthanolamine d'acides gras d'huile tall), 0,16% en poids de Span® 80 (monooléate de sorbitan) et 0,23% en poids de Tween® 81 (monooléate de sorbitan 5EO).

La phase aqueuse est ajoutée à la phase huileuse tout en mélangeant pour former une émulsion. La dispersion résultante est mise sous bullage d'azote pendant 30 minutes tandis que la température est stabilisée à 25 ° C, moment auquel 0,002% en poids de peroxyde est ajouté à l'émulsion et une solution à 0,075% en poids de métabisulfite de sodium (MBS) est introduite dans la dispersion à débit de 0,1 millilitre par minute. La température de polymérisation est contrôlée entre 38 ° C et 42 ° C pendant environ 90 minutes. Les monomères résiduels sont piégés en introduisant une solution à 0,03% en poids de métabisulfite de sodium (MBS) à un débit de 1,0 millilitre par minute. On obtient une émulsion de polymère eau dans huile contenant 20% de polymère actif d'acrylamide et d'ATBS.Na.

On ajoute 1,75% en poids d'un agent d'inversion (Marlophen® NP 8, éthers de nonylphénol et de polyéthylèneglycol 8 OE) dans l'émulsion de polymère eau-dans-huile pour faciliter la mise au point lors de l'utilisation. Le rapport massique R est égal à 1,5.

Exemple 3: Emulsion contenant 20,00% en poids d'un polymère comprenant 18 mol% de monomères sulfonés

Une phase aqueuse est préparée avec 23,40% en poids d'une solution d'acrylamide (à 50% en poids dans l'eau), 16,60% en poids de solution d'ATBS.Na (2-acrylamido-2-méthylpropane sulfonate de sodium, à 50% en poids dans l'eau), 34,90% en poids d'eau déionisée et 0,02% en poids de Versenex 80.

Une phase huileuse est préparée à partir de 23,45% en poids d'huile (Exxsol® D100 S) et les agents émulsifiants suivants : 1,16% en poids de Witcamide®511 (diéthanolamine d'acides gras de tall oil), 0,16% en poids de Span® 80 (monooléate de sorbitan) et 0,23% en poids de Tween® 81 (monooléate de sorbitan 5EO).

La phase aqueuse est ajoutée à la phase huileuse tout en mélangeant pour former une émulsion. La dispersion résultante est mise sous bullage d'azote pendant 30 minutes tandis que la température est stabilisée à 25 ° C, moment auquel 0,002% en poids de peroxyde est ajouté à l'émulsion et une solution à 0,075% en poids de métabisulfite de sodium (MBS) est introduite dans la dispersion à débit de 0,1 millilitre par minute. La température de polymérisation est contrôlée entre 38 ° C et 42 ° C pendant environ 90 minutes. Les monomères résiduels sont piégés en introduisant une solution à 0,03% en poids de métabisulfite de sodium (MBS) à un débit de 1,0 millilitre par minute. On obtient une émulsion de polymère eau dans huile contenant 20% de polymère actif d'acrylamide et d'ATBS.Na.

On ajoute 1,75% en poids d'un agent d'inversion (Marlophen® NP 8, éthers de nonylphénol et de polyéthylèneglycol 8 OE) dans l'émulsion de polymère eau-dans-huile pour faciliter la mise au point lors de l'utilisation. Le rapport massique R est égal à 1,5.

Exemples 4 à 9 :

Les exemples suivants sont réalisés avec un rapport de masse R selon l'invention. Les exemples 4 et 7, puis 5 et 8 et enfin 6 et 9 sont obtenus respectivement selon le même procédé que les exemples 1, 2 et 3 mais avec des quantités plus élevées de Marlophen® NP 8 (agent inverseur).

Exemple 10 : Emulsion contenant 20,00% en poids d'un polymère comprenant 5 mol% de monomères sulfonés et 15 mol% de monomères carboxylés :

Une phase aqueuse est préparée avec 28,70% en poids d'une solution d'acrylamide (à 50% en poids dans l'eau), 5,14% en poids de solution d'ATBS.Na 2-acrylamido-2-méthylpropane sulfonate de sodium, à 50% en poids dans l'eau), 2,42% en poids d'acide acrylique (à 100%), 2,69% en poids d'une solution de hydroxide de sodium (à 50% en poids dans l'eau), 35,95% en poids d'eau déionisée et 0,02% en poids de Versenex 80.

Une phase huileuse est préparée à partir de 23,45% en poids d'huile (Exxsol® D100 S) et les agents émulsifiants suivants : 1,16% en poids de Witcamide®511 (diéthanolamine d'acides gras d'huile de tall), 0,16% en poids de Span® 80 (monooléate de sorbitan) et 0,23% en poids de Tween® 81 (monooléate de sorbitan 5EO).

La phase aqueuse est ajoutée à la phase huileuse tout en mélangeant pour former une émulsion. La dispersion résultante est mise sous bullage d'azote pendant 30 minutes tandis que la température est stabilisée à 25°C, moment auquel 0,002% en poids de peroxyde est ajouté à l'émulsion et une solution à 0,075% en poids de métabisulfite de sodium (MBS) est introduite dans la dispersion à débit de 0,1 millilitre par minute. La température de polymérisation est contrôlée entre 38°C et 42°C pendant environ 90 minutes. Les monomères résiduels sont piégés en introduisant une solution à 0,03% en poids de métabisulfite de sodium (MBS) à un débit de 1,0 millilitre par minute. On obtient une émulsion de polymère eau dans huile contenant 20% de polymère actif d'acrylamide et d'ATBS.Na.

On ajoute 1,75% en poids d'un agent d'inversion (Marlophen® NP 8, éthers de nonylphénol et de polyéthylèneglycol 8 OE) dans l'émulsion de polymère eau-dans-huile pour faciliter la mise au point lors de l'utilisation. Le rapport massique R est égal à 1,5.

Exemple 11 et 12 :

Les exemples suivants sont réalisés avec un rapport de masse R selon l'invention. Les exemples 11 et 12 sont obtenus respectivement selon le même procédé que l'exemple 10 mais avec des quantités plus élevées de Marlophen® NP 8 (agent inverseur).

Le tableau 1 décrit le rapport massique R pour chaque exemple.

[Table 1]

| Exemple | Rapport massique R | Monomère sulfoné (mole %) | Monomère carboxylé (mole %) | Agent d'inversion (quantités variables selon les exemples) |
|---|---|---|---|---|
| 1 | 1.5 | 2 | 0 | Marlophen® NP 8 |
| 4 | 2.5 | | | |
| 7 | 4.0 | | | |
| 2 | 1.5 | 10 | 0 | |
| 5 | 2.5 | | | |
| 8 | 4.0 | | | |
| 3 | 1.5 | 18 | 0 | |
| 6 | 2.5 | | | |
| 9 | 4.0 | | | |
| 10 | 1.5 | 5 | 15 | |
| 11 | 2.5 | | | |
| 12 | 4.0 | | | |
| Table 1 Rapports massique R des émulsions eau dans huile | | | | |

Test de boucle de flux de friction

Une boucle d'écoulement à friction a été construite à partir d'un tube en acier inoxydable d'un diamètre extérieur de 1/4" et d'une longueur totale de 20 pieds. Les solutions d'essai sont pompées au fond d'un réservoir conique de 5 litres. La solution traverse la tubulure et est renvoyée dans le réservoir. Le débit est obtenu à l'aide d'une pompe triplex équipée d'un variateur de vitesse.

4 litres de saumure à 9% de CaCl2 ou d'API ou de 2xAPI sont préparés dans le réservoir d'échantillon et la pompe est démarrée et réglée pour délivrer un débit de 1,5 gal / min. La saumure à 9% de CaCl2 correspond à 9 g de CaCl2 dans 100 ml d'eau, son $R_+$ est égal à 1,00. La saumure API est définie comme étant 8,5 g de NaCl + 2,5 g de CaCl2 dans 100 ml d'eau, son R + étant égal à 0,20. La saumure 2 x API correspond à 17 g de NaCl + 5 g de CaCl2 dans 100 ml d'eau, son $R_+$ est égal à 0,20. La solution saline est recirculée jusqu'à ce que la température s'équilibre à 25°C et un différentiel de pression stabilisé est atteint. Cette pression est enregistrée en tant que "pression initiale" de la saumure à 9% de CaCl2 ou API ou 2 x API.

La quantité d'essai de polymère en émulsion eau dans huile pure est rapidement injectée avec une seringue dans le réservoir d'échantillon contenant la saumure à 9% de CaCl2 ou d'API ou de 2xAPI et un chronomètre est démarré. La dose est enregistrée en gallons d'émulsion eau dans huile par millier de gallons de saumure à 9% de CaCl2 ou d'API ou de 2 x API (gpt). La pression est enregistrée toutes les secondes pendant 5 minutes. Le pourcentage de réduction de frottement (% FRt) à un instant donné 't' est calculé à partir de la chute de pression initiale ΔPi et de la chute de pression à l'instant t, ΔPt, à l'aide de l'équation:

$$\% \, FRt = \frac{\Delta Pi - \Delta Pt}{\Delta Pi} \, x \, 100$$

Résultats

Dans la table 2, toutes les émulsions contiennent 20% en poids de polymère anionique.

[Table 2]

| Ex: | Rapport massique R | Monomère sulfone (mole%) | Monomère carboxylé (mole%) | % FR max dans 9% CaCl₂ | Temps (sec) pour FR max dans 9% CaCl₂ | % FR max dans saumure API | Temps (sec) Max FR dans saumure API | % FR dans saumure 2 x API | Temps Max FR dans saumure 2 x API |
|---|---|---|---|---|---|---|---|---|---|
| 1 | 1,5 | 2 | 0 | 6,42 | 300 | 8,03 | 300 | 3,26 | 300 |
| 4 | 2,5 | 2 | 0 | 20,38 | 281 | 24,82 | 292 | 18,73 | 277 |
| 7 | 4 | 2 | 0 | 41,71 | 269 | 37,86 | 251 | 27,30 | 264 |
| 2 | 1,5 | 10 | 0 | 9,60 | 300 | 9.23 | 299 | 8.30 | 300 |
| 5 | 2,5 | 10 | 0 | 50,00 | 92 | 50.28 | 70 | 49.67 | 94 |
| 8 | 4 | 10 | 0 | 51,59 | 11 | 50.87 | 15 | 50.63 | 23 |
| 3 | 1,5 | 18 | 0 | 5.18 | 300 | 6.06 | 300 | 4.09 | 300 |
| 6 | 2,5 | 18 | 0 | 35.19 | 191 | 37.55 | 201 | 24.95 | 219 |
| 9 | 4 | 18 | 0 | 41.52 | 157 | 47.01 | 142 | 39.12 | 176 |
| 10 | 1,5 | 5 | 15 | 12.16 | 299 | 11.70 | 300 | 10.82 | 300 |
| 11 | 2,5 | 5 | 15 | 50.70 | 83 | 50.75 | 71 | 49.56 | 86 |
| 12 | 4 | 5 | 15 | 52.56 | 15 | 52.73 | 14 | 51.84 | 18 |

Les résultats montrent que les performances de réduction de friction sont améliorées lorsque le rapport massique R est augmenté. Lorsque les concentrations de sel augmentent, les performances de réduction du frottement diminuent. Mais lorsque le rapport de masse R est choisi et adapté (selon la portée de l'invention), il devient possible d'obtenir de très bonnes performances de réduction du frottement dans les saumures et même les saumures hautes.

Les performances de réduction du frottement sont améliorées lorsque le taux de monomère sulfoné du polymère est de 10% en moles. Un taux de monomère sulfoné inférieur (2%) et un taux supérieur (18%) offrent des performances inférieures. La présence d'un monomère anionique entre 0 et 17% en plus du monomère sulfoné permet aussi d'obtenir de bonnes performances de réduction de friction.

Revendications

1. Emulsion inverse eau dans huile comprenant :

- une huile ;
- de l'eau ;
- au moins un polymère anionique hydrosoluble de masse moléculaire moyenne supérieure à 3 millions de daltons, contenant entre 4 et 14 mol% de monomères anioniques sulfonés, entre 0 et 17 mol% de monomères anioniques carboxylés et entre 69 et 96 mol % de monomères non ioniques ;
- au moins un agent d'inversion et au moins un agent émulsifiant, le rapport massique R de la quantité totale d'agent d'inversion à la quantité totale d'agent émulsifiant étant supérieur à 1,8,

- l'agent d'inversion étant choisi parmi un nonylphénol éthoxylé, ayant préférentiellement entre 4 et 10 éthoxylations; un alcool éthoxylé/propoxylé, ayant préférentiellement des éthoxylations/propoxylations de façon à avoir un nombre total de carbone compris entre C10 et C25, un alcool tridécylique éthoxylé et un alcool gras éthoxylé/propoxylé.

- l'agent émulsifiant étant choisi parmi le monooléate de sorbitan, les esters de sorbitan polyethoxylés, la diéthanolamide des acides gras de l'huile de tall, les acides gras polyéthoxylés.

2. Emulsion selon la revendication 1 **caractérisée en ce qu'**elle comprend entre 15 et 50 % en poids de polymère hydrosoluble anionique hydrosoluble, préférentiellement entre 15 et 40% en poids et encore plus préférentiellement entre 15 et 25 % en poids, par rapport au poids total de l'émulsion.

3. Emulsion selon la revendication 1 ou 2 **caractérisée en ce que** le rapport massique R de la quantité totale d'agent d'inversion à la quantité totale d'agent émulsifiant est supérieur à 2, plus préférentiellement supérieur à 2,5, encore plus préférentiellement supérieur à 3, encore plus préférentiellement supérieur à 3,5, encore plus préférentiellement supérieur à 4.

4. Emulsion selon l'une quelconque des revendications 1 à 3, **caractérisée en ce que** les monomères non ioniques du polymère anionique hydrosoluble sont choisis parmi l'acrylamide, le méthacrylamide, les N-alkylacrylamides, les N-alkylméthacrylamides, les N,N dialkylacrylamides, les N,N dialkyleméthacrylamides, les esters acryliques; les esters méthacrylique; avec comme monomère préféré l'acrylamide.

5. Emulsion selon l'une quelconque des revendications 1 à 4, **caractérisée en ce que** les monomères anioniques sulfonés du polymère anionique hydrosoluble sont choisis parmi l'acide 2-acrylamido-2-méthylpropane sulfonique (ATBS), l'acide 2-méthacrylamido-2-méthylpropane, l'acide styrène sulfonique, l'acide vinylsulfonique, le méthacrylate de 3-sulfopropyle lesdits monomères anioniques étant non salifiés, partiellement ou totalement salifiés, le monomère anionique sulfoné préféré est le sel de sodium de l'acide 2-acrylamido-2-méthylpropane sulfonique.

6. Emulsion selon l'une quelconque des revendications 1 à 5, **caractérisée en ce que** les monomères anioniques carboxylés du polymère anionique hydrosoluble sont choisis parmi l'acide acrylique, l'acide méthacrylique, l'acide itaconique, l'acide maléique, lesdits monomères anioniques étant non salifiés, partiellement ou totalement salifiés, le monomère anionique carboxylé préféré est le sel de sodium de l'acide acrylique.

7. Emulsion selon l'une quelconque des revendications 1 à 6, **caractérisée en ce que** le polymère anionique hydrosoluble a une masse moléculaire moyenne comprise entre 3 et 30 millions de daltons et préférentiellement entre 8 et 18 millions de daltons.

8. Emulsion selon l'une quelconque des revendications 1 à 7 **caractérisée en ce qu'**elle contient entre 0,5 et 10% en poids d'agent d'inversion et 0,5 et 16 % en poids d'agent émulsifiant, par rapport au poids total de l'émulsion.

9. Procédé de préparation d'un fluide de fracturation comprenant :

a) La fourniture d'une émulsion inverse selon l'une quelconque des revendications 1 à 8,
b) L'inversion de l'émulsion inverse en l'ajoutant à une saumure, contenant plus de 30 000 ppm de sels et avec un ratio divalent $R^+ \geq 0,15$, $R^+=$ ratio massique : sels divalents/ sels total,
c) Éventuellement, l'ajout d'au moins un agent de soutènement.

10. Procédé de préparation d'un fluide de fracturation selon la revendication 8 **caractérisée en ce que** pour l'étape b) la saumure contient plus de 70 000 ppm de sels et préférentiellement plus de 100 000 ppm de sels.

11. Procédé de préparation d'un fluide de fracturation selon l'une des revendications 9 ou 10, **caractérisée** en ce pour l'étape b) la saumure un ratio divalent $R^+$ supérieure ou égale à 0,20 et préférentiellement $R^+$ supérieure ou égale à 0,25.

12. Procédé de préparation d'un fluide de fracturation selon l'une quelconque des revendications 9 à 11 comprenant :

a) La fourniture d'une émulsion inverse selon l'invention contenant au moins entre 15 et 25 % en poids, par rapport au poids de fluide de fracturation, d'un polymère anionique hydrosoluble contenant entre 4 et 14 mol% du sel de sodium de l'acide 2-acrylamido-2-méthylpropane sulfonique, entre 0 et 17% d'acrylate de sodium et entre 69 et 96 mol % d'acrylamide,; au moins un agent d'inversion et au moins un agent émulsifiant, le rapport massique **R** de la quantité totale d'agent d'inversion à la quantité totale d'agent émulsifiant étant supérieur à 2.5,

b) L'inversion de l'émulsion inverse en l'ajoutant à une saumure, contenant plus de 100 000 ppm de sels et avec un ratio divalent R$^+$ supérieure ou égale à 0.20, R$^+$= ratio massique : sels divalents/ sels totaux, afin d'obtenir une concentration massique en polymère anionique hydrosoluble dans le fluide d'injection comprise entre 0,05 et 1%.

c) Éventuellement, l'ajout d'au moins un agent de soutènement.

13. Procédé de fracturation d'une formation souterraine comprenant :

aa) la fourniture d'un fluide de fracturation obtenu selon la méthode de préparation selon l'une quelconque des revendication 9 à 12,

bb) l'introduction du fluide d'injection dans une partie de la formation souterraine,

cc) la fracturation de la formation souterraine avec le fluide d'injection,

dd) la récupération d'un mélange de gaz, d'huile et de fluide aqueux.

14. Procédé de réduction de friction d'un fluide de fracturation dans une opération de fracturation hydraulique de réservoir souterrain d'huile ou de gaz non conventionnel comprenant la préparation d'un fluide de fracturation selon l'une quelconque des revendications 9 et 12 et l'injection dudit fluide de fracturation dans une formation souterraine.

**Patentansprüche**

1. Inverse Wasser-in-Öl-Emulsion, umfassend:

- ein Öl;
- Wasser;
- mindestens ein wasserlösliches anionisches Polymer mit einem mittleren Molekulargewicht von mehr als 3 Millionen Dalton, das zwischen 4 und 14 Mol-% sulfonierte anionische Monomere, zwischen 0 und 17 Mol-% carboxylierte anionische Monomere und zwischen 69 und 96 Mol-% nichtionische Monomere enthält;
- mindestens ein Inversionsmittel und mindestens einen Emulgator, wobei das Massenverhältnis R der Gesamtmenge an Inversionsmittel zur Gesamtmenge an Emulgator größer als 1,8 ist,

- wobei das Inversionsmittel ausgewählt ist aus ethoxyliertem Nonylphenol, das vorzugsweise 4 bis 10 Ethoxylierungen aufweist, ethoxyliertem/propoxyliertem Alkohol, der vorzugsweise Ethoxylierungen/Propoxylierungen aufweist, so dass er eine Gesamtkohlenstoffzahl zwischen C10 und C25 aufweist, ethoxyliertem Tridecylalkohol und ethoxyliertem/propoxyliertem Fettalkohol.
- wobei der Emulgator ausgewählt ist aus Sorbitanmonooleat, polyethoxylierten Sorbitanestern, Diethanolamid von Tallölfettsäuren, polyethoxylierten Fettsäuren.

2. Emulsion nach Anspruch 1, **dadurch gekennzeichnet, dass** sie zwischen 15 und 50 Gew.-% wasserlösliches anionisches wasserlösliches Polymer, vorzugsweise zwischen 15 und 40 Gew.-% und noch bevorzugter zwischen 15 und 25 Gew.-%, bezogen auf das Gesamtgewicht der Emulsion, enthält.

3. Emulsion nach Anspruch 1 oder 2, **dadurch gekennzeichnet, dass** das Massenverhältnis R der Gesamtmenge an Inversionsmittel zur Gesamtmenge an Emulgator größer als 2, bevorzugter größer als 2,5, noch bevorzugter größer als 3, noch bevorzugter größer als 3,5, noch bevorzugter größer als 4 ist.

4. Emulsion nach einem der Ansprüche 1 bis 3, **dadurch gekennzeichnet, dass** die nichtionischen Monomere des wasserlöslichen anionischen Polymers ausgewählt sind aus Acrylamid, Methacrylamid, N-Alkylacrylamiden, N-Alkylmethacrylamiden, N,N-Dialkylacrylamiden, N,N-Dialkylmethacrylamiden, Acrylsäureestern, Methacrylsäureestern, wobei Acrylamid das bevorzugte Monomer ist.

5. Emulsion nach einem der Ansprüche 1 bis 4, **dadurch gekennzeichnet, dass** die sulfonierten anionischen Monomere des wasserlöslichen anionischen Polymers ausgewählt sind aus 2-Acrylamido-2-methylpropansulfonsäure (ATBS), 2-Methacrylamido-2-methylpropansäure, Styrolsulfonsäure, Vinylsulfonsäure, 3-Sulfopropylmethacrylat wobei die anionischen Monomere nicht, teilweise oder vollständig in ein Salz überführt werden, wobei das bevorzugte sulfonierte anionische Monomer das Natriumsalz der 2-Acrylamido-2-methylpropansulfonsäure ist.

**6.** Emulsion nach einem der Ansprüche 1 bis 5, **dadurch gekennzeichnet, dass** die carboxylierten anionischen Monomere des wasserlöslichen anionischen Polymers ausgewählt sind aus Acrylsäure, Methacrylsäure, Itaconsäure, Maleinsäure, wobei die anionischen Monomere nicht, teilweise oder vollständig in ein Salz überführt sind, wobei das bevorzugte carboxylierte anionische Monomer das Natriumsalz der Acrylsäure ist.

**7.** Emulsion nach einem der Ansprüche 1 bis 6, **dadurch gekennzeichnet, dass** das wasserlösliche anionische Polymer ein mittleres Molekulargewicht von 3 bis 30 Millionen Dalton und vorzugsweise von 8 bis 18 Millionen Dalton hat.

**8.** Emulsion nach einem der Ansprüche 1 bis 7, **dadurch gekennzeichnet, dass** sie zwischen 0,5 und 10 Gew.-% Inversionsmittel und 0,5 und 16 Gew.-% Emulgator, bezogen auf das Gesamtgewicht der Emulsion, enthält.

**9.** Verfahren zur Herstellung eines Frakturierungsfluids, umfassend:

a) Mindestens eine umgekehrte Emulsion nach einem der Ansprüche 1 bis 8,
b) Die Umkehrung der inversen Emulsion durch Zugabe zu einer Salzlake, die mehr als 30.000 ppm Salze enthält und ein zweiwertiges Verhältnis $R^+ \geq 0,15$ aufweist, $R^+$= Massenverhältnis: zweiwertige Salze/Gesamtsalze,
c) Eventuell das Hinzufügen von mindestens einem Stützmittel.

**10.** Verfahren zur Herstellung eines Frakturierungsfluids nach Anspruch 8, **dadurch gekennzeichnet, dass** für Schritt b) die Sole mehr als 70.000 ppm Salze und vorzugsweise mehr als 100.000 ppm Salze enthält.

**11.** Verfahren zur Herstellung eines Frakturierungsfluids nach einem der Ansprüche 9 oder 10, **dadurch gekennzeichnet, dass** für Schritt b) die Sole ein zweiwertiges Verhältnis $R^+$ größer oder gleich 0,20 und vorzugsweise $R^+$ größer oder gleich 0,25 aufweist.

**12.** Verfahren zur Herstellung eines Verkleidungselements nach einem der Ansprüche 9 bis 11, umfassend die folgenden Schritte:

a) Die Bereitstellung einer erfindungsgemäßen Invertemulsion, die mindestens zwischen 15 und 25 Gew.-%, bezogen auf das Gewicht der Frakturierungsflüssigkeit, eines wasserlöslichen anionischen Polymers enthält, das zwischen 4 und 14 Mol-% des Natriumsalzes der 2-Acrylamido-2-methylpropansulfonsäure, zwischen 0 und 17 % Natriumacrylat und zwischen 69 und 96 Mol-% Acrylamid enthält,; mindestens ein Inversionsmittel und mindestens einen Emulgator, wobei das Massenverhältnis **R** der Gesamtmenge an Inversionsmittel zur Gesamtmenge an Emulgator größer als 2 ist.5,
b) Inversion der inversen Emulsion durch Zugabe zu einer Salzlösung, die mehr als 100.000 ppm Salze enthält und ein zweiwertiges Verhältnis $R^+$ von größer oder gleich 0,20 aufweist, wobei $R^+$= Massenverhältnis: zweiwertige Salze/Gesamtsalze, um eine Massenkonzentration des wasserlöslichen anionischen Polymers in der Injektionsflüssigkeit zwischen 0,05 und 1 % zu erhalten.
c) Eventuell das Hinzufügen von mindestens einem Stützmittel.

**13.** Verfahren zum Frakturieren einer unterirdischen Formation, umfassend:

aa) Bereitstellen eines Frakturierungsfluids, das nach dem Herstellungsverfahren gemäß einem der Ansprüche 9 bis 12 erhalten wurde,
bb) das Einbringen des Injektionsfluids in einen Teil der unterirdischen Formation,
cc) Fracking der unterirdischen Formation mit dem Injektionsfluid,
dd) Gewinnung einer Mischung aus Gas, Öl und einer wässrigen Flüssigkeit.

**14.** Verfahren zur Verringerung der Reibung eines Frac-Fluids bei einem hydraulischen Frac-Vorgang in einem unterirdischen Reservoir für unkonventionelles Öl oder Gas, bei dem man ein Frac-Fluid gemäß einem der Ansprüche 9 oder 12 herstellt und das Frac-Fluid in eine unterirdische Formation einspritzt.

**Claims**

**1.** Water-in-oil inverse emulsion comprising:

- oil;
- water;
- at least one water-soluble anionic polymer of average molecular weight higher than 3 million daltons, containing between 4 and 14 mol % of sulfonated anionic monomers, between 0 and 17 mol % of carboxylated anionic monomers and between 69 and 96 mol % of nonionic monomers;
- at least one inverting agent and at least one emulsifying agent, the weight ratio R between the total amount of inverting agent and the total amount of emulsifying agent being higher than 1.8,

- the inverting agent being selected from among an ethoxylated nonylphenol preferably having between 4 and 10 ethoxylations; an ethoxylated/propoxylated alcohol preferably having ethoxylations/propoxylations to obtain a total number of carbons of between C10 and C25, an ethoxylated tridecylic alcohol and an ethoxylated/propoxylated fatty alcohol;
- the emulsifying agent being selected from among sorbitan monooleate, polyethoxylated sorbitan esters, the diethanolamide of tall oil fatty acids, polyethoxylated fatty acids.

2. The emulsion according to claim 1 **characterized in that** it comprises between 15 and 50 weight % of water-soluble anionic polymer, preferably between 15 and 40 weight % and more preferably between 15 and 25 weight %, relative to the total weight of the emulsion.

3. The emulsion according to claim 1 or 2, **characterized in that** the weight ratio R between the total amount of inverting agent and the total amount of emulsifying agent is higher than 2, preferably higher than 2.5, more preferably higher than 3, further preferably higher than 3.5 and still further preferably higher than 4.

4. The emulsion according to any one of claims 1 to 3, **characterized in that** the nonionic monomers of the water-soluble anionic polymer are selected from among acrylamide, methacrylamide, N-alkylacrylamides, N-alkylmethacrylamides, N,N dialkylacrylamides, N,N dialkylmethacrylamides, acrylic esters; methacrylic esters; the preferred monomer being acrylamide.

5. The emulsion according to any one of claims 1 to 4, **characterized in that** the sulfonated anionic monomers of the water-soluble anionic polymer are selected from among 2-acrylamido-2-methylpropane sulfonic acid (ATBS), 2-methacrylamido-2-methylpropane acid, styrene sulfonic acid, vinylsulfonic acid, 3-sulfopropyl methacrylate, said anionic monomers being non-salified, partly or fully salified, the preferred sulfonated anionic monomer being the sodium salt of 2-acrylamido-2-methylpropane sulfonic acid.

6. The emulsion according to any one of claims 1 to 5, **characterized in that** the carboxylated anionic monomers of the water-soluble anionic polymer are selected from among acrylic acid, methacrylic acid, itaconic acid, maleic acid, said anionic monomers being non-salified, partly or fully salified, the preferred carboxylated anionic monomer being the sodium salt of acrylic acid.

7. The emulsion according to any one of claims 1 to 6, **characterized in that** the water-soluble anionic polymer has an average molecular weight of between 3 and 30 million daltons and preferably between 8 and 18 million daltons.

8. The emulsion according to any one of claims 1 to 7, **characterized in that** it contains between 0.5 and 10 weight % of inverting agent and 0.5 and 16 weight % of emulsifying agent, relative to the total weight of the emulsion.

9. Method for preparing a fracturing fluid, comprising:

a) Providing an inverse emulsion according to any one of claims 1 to 8,
b) Inverting the inverse emulsion through addition thereof to a brine containing more than 30 000 ppm of salts and with a divalent ratio $R^+ \geq 0.15$, $R^+$ = weight ratio: divalent salts/ total salts,
c) Optionally adding at least one proppant.

10. The method for preparing a fracturing fluid according to claim 8, **characterized in that** at step b) the brine contains more than 70 000 ppm of salts and preferably more than 100 000 ppm of salts.

11. The method for preparing a fracturing fluid according to claim 9 or 10, **characterized in that** at step b) the divalent ratio $R^+$ of the brine is higher than or equal to 0.20 and preferably $R^+$ is higher than or equal to 0.25.

**12.** The method for preparing a fracturing fluid according to any one of claims 9 to 11, comprising:

a) Providing an inverse emulsion of the invention containing at least between 15 and 25 weight %, relative to the weight of fracturing fluid, of a water-soluble anionic polymer containing between 4 and 14 mol % of the sodium salt of 2-acrylamido-2-methylpropane sulfonic acid, between 0 and 17 % of sodium acrylate and between 69 and 96 mol % of acrylamide; at least one inverting agent and at least one emulsifying agent, the weight ratio **R** between the total amount of inverting agent and the total amount of emulsifying agent being higher than 2.5,

b) Inverting the inverse emulsion through addition thereof to brine containing more than 100 000 ppm of salts and with a divalent ratio $R^+$ higher than or equal to 0.20, $R^+$= weight ratio: divalent salts/total salts, to obtain a weight concentration of water-soluble anionic polymer in the injection fluid of between 0.05 and 1 %.

c) Optionally, adding at least one proppant.

**13.** Process for fracturing an underground formation, comprising:

aa) providing a fracturing fluid obtained according to the preparation method in any one of claims 9 to 12,

bb) injecting the injection fluid into a portion of the underground formation,

cc) fracturing the underground formation with the injection fluid,

dd) recovering a mixture of gas, oil, and aqueous fluid.

**14.** Method for reducing the friction of a fracturing fluid in a hydraulic fracturing operation on an unconventional underground reservoir of oil or gas, comprising the preparation of a fracturing fluid according to any one of claims 9 to 12 and the injection of said fracturing fluid into an underground formation.

## RÉFÉRENCES CITÉES DANS LA DESCRIPTION

**Documents brevets cités dans la description**

- US 8383560 B

**Littérature non-brevet citée dans la description**

- **GRIFFIN WC.** Classification of Surface-Active Agents by HLB. *Journal of the Society of Cosmetic Chemists,* 1949, vol. 1, 311-326